# EUROPÄISCHE PATENTSCHRIFT

(11) **EP 3 049 823 B1**
(45) Veröffentlichungstag und Bekanntmachung des Hinweises auf die Patenterteilung: **02.01.2019**
(21) Anmeldenummer: 14752837.6
(22) Anmeldetag: 14.08.2014
(51) Int. Cl.: G01S 17/89, G01S 7/48, G01S 7/481

(54) **VERFAHREN ZUR STEUERUNG EINES MIKROSPIEGELSCANNERS UND MIKROSPIEGELSCANNER**
METHOD FOR CONTROLLING A MICRO-MIRROR SCANNER, AND MICRO-MIRROR SCANNER
PROCÉDÉ DE COMMANDE D'UN SYSTÈME DE BALAYAGE À MICRO-MIROIRS ET SYSTÈME DE BALAYAGE À MICRO-MIROIRS

(30) Priorität: 27.09.2013 DE 102013219567
(43) Veröffentlichungstag der Anmeldung: 03.08.2016
(73) Patentinhaber: Robert Bosch GmbH, 70442 Stuttgart (DE)
(72) Erfinder: SPARBERT, Jan, 71277 Rutesheim (DE); FISCHER, Frank, 72810 Gomaringen (DE); SCHATZ, Frank, 70806 Kornwestheim (DE)
(86) Internationale Anmeldenummer: PCT/EP2014/067394
(87) Internationale Veröffentlichungsnummer: WO 2015/043825

(56) Entgegenhaltungen:
- US-A1- 2004 074 296
- US-A1- 2004 213 463
- US-B1- 6 304 321
- US-B1- 8 203 702

## Beschreibung

Die vorliegende Erfindung betrifft ein Verfahren zur Steuerung eines Mikrospiegelscanners und einen adaptiven Mikrospiegelscanner. Insbesondere betrifft sie ein Verfahren zur adaptiven Steuerung eines Mikrospiegelscanners in einem Fahrzeug und einen adaptiven Mikrospiegelscanner in einem Fahrzeug.

### Stand der Technik

Moderne Fahrassistenzsysteme verwenden häufig Sensorik, die Objekte in allen drei Raumdimensionen genau erfassen kann. Darauf basieren zahlreiche nachgeschaltete Funktionen wie beispielsweise ein Abstandstempomat, eine Einparkhilfe, ein Spurhalteassistent, eine Verkehrszeichenerkennung, eine Spurverlassenswarnung und andere. Licht-, insbesondere laserbasierte Sensoriken, so genannte Laserscanner, oder auch "Lidar" oder "Ladar", sind für solche Aufgaben gut geeignet.

Vorteilhaft werden dafür besonders robuste und kostengünstige Mikrospiegel, d.h. mikromechanische Spiegel, eingesetzt. Licht- bzw. Laserscanner mit solchen mikromechanischen Spiegeln werden auch Mikrospiegelscanner oder Mikrospiegellaserscanner genannt. Technische Herausforderungen ergeben sich aus der begrenzten thermischen Belastbarkeit der verwendeten Lichtquellen (beispielsweise Laserdioden, LEDs). Dadurch ist die Anzahl der Bildpunkte eines Scanvorgangs, bzw. pro Zeiteinheit, begrenzt. Entsprechend kann bei herkömmlichen Systemen die Winkelauflösung vergleichsweise gering ausfallen.

In der US 5 638 164 ist ein Verfahren zur Steuerung eines Laserscanners beschrieben, in welchem eine Szene mit Laserstrahlen abgetastet wird. Die Laserstrahlen werden gemäß einem regelmäßigen Punktgitter ausgesandt, und die Reflektivität von Objekten, auf welche die Lichtstrahlen treffen, wird bestimmt. Wird gemäß der Reflektivität ein Gebiet als "interessant" klassifiziert, kann der Gitterabstand des regelmäßigen Punktgitters verringert werden, um das "interessante" Gebiet genauer zu untersuchen.

Aus der US 6 304 321 B1 ist ein Fahrzeugerkennungs- und Fahrzeugklassifizierungs-Sensor bekannt, welcher eine präzise 3D-Profilierung und Klassifizierung von Straßenfahrzeugen für Geschwindigkeiten bis zu 100 Meilen pro Stunde bereitstellen kann.

Aus der US 8 203 702 B1 ist ein Verfahren und ein System zum Lokalisieren von externen Gegenständen mit einer Quelle, einem Detektor (PSD), einer Eintrittsöffnung und einem afokalen Vergrößerungs- oder Verkleinerungs-Element zum Expandieren eines Sichtfeldes > 90 ° oder zur Präzisionsverfeinerung bekannt.

Die US 2004/0213463 A1 offenbart ein räumliches codiertes Multiplexing-Beleuchtungssystem zur Bildbestimmung und zur Entfernungsschätzung.

US 2004/0074296 A1 offenbart eine Vorrichtung und ein Verfahren zum Bestimmen einer Wassertiefe aus einem darüber fliegenden Flugzeug. Die Bestimmung erfolgt mittels eines von der Wasseroberfläche und vom Wassergrund reflektierten ersten Laserstrahls und mittels eines nur von der Wasseroberfläche reflektierten zweiten Laserstrahls. Eine Makrospiegel dient zur rasterförmigen Ablenkung des ersten Laserstrahls. Zur Erhöhung der Abtastdichte ist in den Strahlengang des ersten Laserstrahls ein Mikrospiegel eingebaut, der den Auftreffpunkt des ersten Laserstrahls auf dem Makrospiegel moduliert.

### Offenbarung der Erfindung

Die vorliegende Erfindung offenbart ein Verfahren zur Steuerung eines Mikrospiegelscanners mit den Merkmalen des Patentanspruchs 1 und einen Mikrospiegelscanner mit den Merkmalen des Patentanspruchs 9.

### Vorteile der Erfindung

Die der vorliegenden Erfindung zu Grunde liegende Erkenntnis besteht darin, dass durch Steuerung einer Lichtquelle, beispielsweise einer Laserquelle, Eigenschaften der ausgesandten Lichtstrahlen gezielt und vielseitig verändert werden können wodurch die Effizienz und der Funktionsumfang von Mikrospiegelscannern deutlich erhöht werden können. Insbesondere ist eine hohe effektive Auflösung eines zu scannenden Bereichs bei minimaler thermischer Belastung der Lichtquelle möglich. Dadurch können funktionale Muss-Anforderungen erfüllt werden.

Der erfindungsgemäße Mikrospiegelscanner ist robust und gleichzeitig kostengünstig. Er ermöglicht es, die, etwa durch die thermische Belastung, beschränkte Anzahl von Bildpunkten derart einzusetzen, dass in für gewünschte Funktionen interessanten Raumwinkelbereichen ("regions of interest" ROI), effektiv eine höhere Auflösung des Scans möglich ist. Die Anzahl der Bildpunkte kann aber auch bewusst klein gehalten werden, um eine anfallende Datenmenge frühzeitig zu reduzieren und so Verarbeitungsaufwand und Kosten dafür zu reduzieren. Es können also Eigenschaften der Lichtstrahlen, und damit auch der von ihnen projizierten Bildpunkte, in Abstrahl-Richtung, Auflösung, Reichweite und Bildrate während der Laufzeit des Systems so verändert werden, dass ein für gewünschte Funktionen optimiertes Abbild der Umwelt erfasst werden kann.

Durch die Steuerung der Licht- (oder Laser-)quelle kann ein präzises Haushalten der beim Scannen entstehenden Verlustwärme möglich werden. Wird beispielsweise ein erster Raumwinkelbereich genauer vermessen, das heißt, werden dorthin mehr Lichtstrahlen pro Zeiteinheit und/oder Steradiant entsandt, können gleichzeitig in einen zweiten Raumwinkelbereich weniger Lichtstrahlen pro Zeiteinheit und/oder Steradiant entsandt werden, sodass die durchschnittlich erzeugte Wärme pro Zeiteinheit beispielsweise im Wesentlichen gleich bleibt. Es kann auch bewusst eine erhöhte thermische Belastung des Mikrospiegelscanners für längere Zeit in Kauf genommen werden, auf welche dann eine Ruhepause zur Abkühlung folgen kann. Zu diesem Zweck kann beispielsweise eine Temperaturmesseinrichtung an und/oder in dem Mikrospiegelscanner vorgesehen sein.

Das Anpassen des Schussmusters kann einfachen Regeln folgen, aber auch sehr komplex durch situative und funktionale Eigenschaften, z.B. durch einen Objektverfolgungsalgorithmus ("Tracking") oder eine Situationsanalyse gesteuert werden. Insbesondere können geschlossene Regelschleifen von Sensorik und Funktionen realisiert werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung des erfindungsgemäßen Verfahrens erfolgt das Ansteuern des verstellbaren mikromechanischen Spiegels mit zweiten Ansteuersignalen derart, dass der verstellbare mikromechanische Spiegel zyklisch eine bestimmte Abfolge der Spiegelstellungen durchfährt. Das Bestimmen der aktuellen Spiegelstellung des verstellbaren mikromechanischen Spiegels kann dann basierend auf den zweiten Ansteuersignalen erfolgen. Eine separate Spiegelstellungs-Bestimmungseinrichtung, beispielsweise mit eigenen elektromechanischen Elementen, kann so vermieden werden, was die Komplexität und Kosten senken kann.

Gemäß einer weiteren bevorzugten Weiterbildung ist die bestimmte Abfolge von Spiegelstellungen, welche der verstellbare mikromechanische Spiegel zyklisch durchfährt, in Abhängigkeit von ersten Signalen von äußeren Sensoren und/oder in Abhängigkeit von einer ersten Eingabe eines Benutzers im laufenden Betrieb anpassbar. Äußere Sensoren sind solche Sensoren, welche nicht in den Mikrospiegelsensor integriert sind. Es kann beispielsweise ein Raumwinkelbereich, in welchem ein besonders interessantes Objekt identifiziert wurde, besonders fein abgetastet werden, indem der Spiegel lediglich solche Spiegelstellungen durchfährt, welche zur Ablenkung von Lichtstrahlen zum Scannen dieses Raumwinkelbereichs führen. Über die Wiederholrate, d.h. in welcher Zeitfolge ein bestimmter Raumwinkelbereich angesteuert wird, kann eine regional variierte Scanrate erreicht werden.

Gemäß einer weiteren bevorzugten Weiterbildung ist das Schussmuster in Abhängigkeit von zweiten Signalen von äußeren Sensoren und/oder in Abhängigkeit von einer zweiten Eingabe eines Benutzers im laufenden Betrieb des Mikrospiegelscanners anpassbar. Beispielsweise kann in Abhängigkeit von einer Wettersituation, wie etwa starkem Nebel, das Schussmuster angepasst werden, um das Scannen zu optimieren.

Gemäß einer weiteren bevorzugten Weiterbildung wird das Schussmuster derart angepasst, dass in Abhängigkeit von ersten Spiegelstellungen, welche zusammenhängend nacheinander durchfahren werden, eine erste Mehrzahl der Lichtstrahlen erzeugt wird. Die Lichtstrahlen der ersten Mehrzahl sind durch erste, jeweils gleiche, Zeitabstände voneinander zeitlich beabstandet. Ein solches Schussmuster kann etwa zu Beginn des Verfahrens oder als Standardschussmuster verwendet werden, um ein erstes Scan-Abbild der Umgebung zu erstellen, aufgrund dessen im Folgenden genauere Anpassungen vorgenommen werden können.

Gemäß einer weiteren bevorzugten Weiterbildung wird das Schussmuster derart angepasst, dass in Abhängigkeit von zweiten Spiegelstellungen, welche zusammenhängend nacheinander durchfahren werden, eine zweite Mehrzahl der Lichtstrahlen erzeugt wird. Die Lichtstrahlen der zweiten Mehrzahl sind durch zweite, jeweils gleiche, Zeitabstände voneinander zeitlich beabstandet, wobei die zweiten Zeitabstände kürzer oder länger sind als die ersten Zeitabstände. Dadurch kann auf einfache Weise, ohne dass die Bewegung des mikromechanischen Spiegels verändert werden muss, eine genauere bzw. ungenauere Abtastung eines Raumwinkelbereichs erfolgen, indem in diesen Raumwinkelbereich mehr bzw. weniger Lichtstrahlen zum Scannen entsandt werden als in einen anderen.

Gemäß einer weiteren bevorzugten Weiterbildung wird das Schussmuster derart angepasst, dass in Abhängigkeit von dritten Spiegelstellungen, welche zusammenhängend nacheinander durchfahren werden, eine dritte Mehrzahl der Lichtstrahlen erzeugt wird. Die Lichtstrahlen der dritten Mehrzahl der Lichtstrahlen werden mit einer breiteren oder schmäleren Strahlform als die Lichtstrahlen der ersten Mehrzahl der Lichtstrahlen erzeugt. Breitere Strahlformen können es ermöglichen, bei gleichzeitig geringer thermischer Belastung des Mikrospiegelscanners den Anteil der gescannten Raumwinkel zu erhöhen. Schmälere Strahlformen hingegen können ein präziseres Scannen ermöglichen.

Gemäß einer weiteren bevorzugten Weiterbildung wird das Schussmuster derart angepasst, dass in Abhängigkeit von vierten Spiegelstellungen, welche zusammenhängend nacheinander durchfahren werden, eine vierte Mehrzahl der Lichtstrahlen erzeugt wird. Die Lichtstrahlen der vierte Mehrzahl der Lichtstrahlen werden mit einer höheren oder einer geringeren Strahlungsleistung als die Lichtstrahlen der ersten Mehrzahl der Lichtstrahlen erzeugt. Somit kann je nach Bedarf, beispielsweise in Abhängigkeit von dritten Signalen von äußeren Sensoren, die effektive Reichweite der Lichtstrahlen eingestellt werden. Sollen beispielsweise sehr nahe Objekte vermessen, d.h. gescannt, werden, können etwa Lichtstrahlen mit geringerer Strahlungsleistung erzeugt werden, um Energie zu sparen und die thermische Belastung des Mikrospiegelscanners zu verringern.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Figur 1: ein schematisches Flussdiagramm zur Erläuterung eines erfindungsgemäßen Verfahrens zur Steuerung eines Mikrospiegelscanners;
- Figur 2: eine schematische Ansicht eines Mikrospiegelscanners gemäß einer ersten Ausführungsform der vorliegenden Erfindung;
- Figur 3: eine schematische Ansicht eines Mikrospiegelscanners gemäß einer zweiten Ausführungsform der vorliegenden Erfindung;
- Figur 4: ein schematisches Blockdiagramm, welches ein mögliches Zusammenwirken von Komponenten eines erfindungsgemäßen Mikrospiegelscanners veranschaulicht;
- Figur 5A: schematisch ein beispielhaftes Schussmuster, wie es in dem erfindungsgemäßen Verfahren zur Steuerung eines Mikrospiegelscanners verwendbar ist;
- Figur 5B: schematisch Kegelschalen, entlang welchen die Lichtstrahlen gemäß dem Schussmuster zum Scannen des Raumwinkels ausgesandt werden können; und
- Figuren 6A - 6C: schematische Diagramme zur Erläuterung verschiedener möglicher Eigenschaften der gemäß dem Schussmuster erzeugten Lichtstrahlen.

In allen Figuren sind gleiche bzw. funktionsgleiche Elemente und Vorrichtungen - sofern nichts anderes angegeben ist - mit denselben Bezugszeichen versehen.

### Ausführungsformen der Erfindung

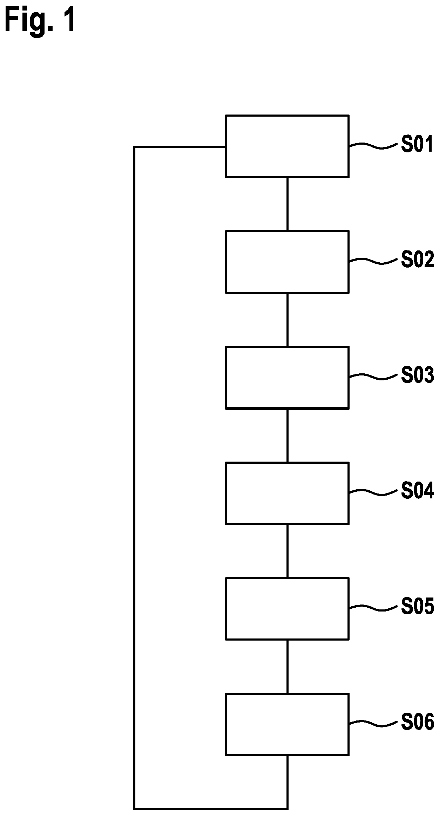

Figur 1 zeigt ein schematisches Flussdiagramm zur Erläuterung eines erfindungsgemäßen Verfahrens zur Steuerung eines Mikrospiegelscanners. Die Nummerierung der Verfahrensschritte soll nicht notwendigerweise bedeuten, dass die Schritte in einer bestimmten Reihenfolge erfolgen sollen, insbesondere können auch mehrere Verfahrensschritte gleichzeitig durchgeführt werden.

In einem ersten Verfahrensschritt (S01) wird ein Schussmuster 13 bereitgestellt. Das Schussmuster 13 umfasst zumindest Informationen über erste Ansteuersignale zum Ansteuern einer Lichtquelle 10 des Mikrospiegelscanners.

Das Schussmuster 13 kann auch Informationen über zweite Ansteuersignale umfassen, welche zum Ansteuern eines verstellbaren mikromechanischen Spiegels 14 des Mikrospiegelscanners bestimmt sind. Die ersten Ansteuersignale zum Ansteuern der Lichtquelle 10 sind gemäß dem Schussmuster 13 abhängig von Spiegelstellungen des Spiegels 14.

In einem weiteren Verfahrensschritt S02 wird eine aktuelle Spiegelstellung des mikromechanischen Spiegels 14 bestimmt. Dazu kann beispielsweise ausgewertet werden, gemäß welchen zweiten Ansteuersignalen der mikromechanische Spiegel 14 aktuell angesteuert ist. Daraus kann ermittelt werden, wie der mikromechanische Spiegel 14 aktuell ausgerichtet ist, das heißt in welcher aktuellen Spiegelstellung er sich befindet.

Alternativ dazu kann eine Spiegelstellungs-Bestimmungseinrichtung 15 dazu ausgebildet sein, die aktuelle Spiegelstellung des mikromechanischen Spiegels 14 zu bestimmen S02. Dazu können beispielsweise induktive und/oder kapazitive Messelemente der Spiegelstellungs-Bestimmungseinrichtung 15 an oder bei dem Mikrospiegel 14 ausgebildet sein und von der Spiegelstellungs-Bestimmungseinrichtung 15 ausgewertet werden. Die Spiegelstellungs-Bestimmungseinrichtung 15 kann vorteilhaft dazu verwendet werden, Abweichungen zwischen einer gewünschten aktuellen Spiegeleinstellung und einer tatsächlichen aktuellen Spiegeleinstellung des mikromechanischen Spiegels 14 zu bestimmen, wodurch sich eine Genauigkeit des Mikrospiegelscanners erhöhen kann.

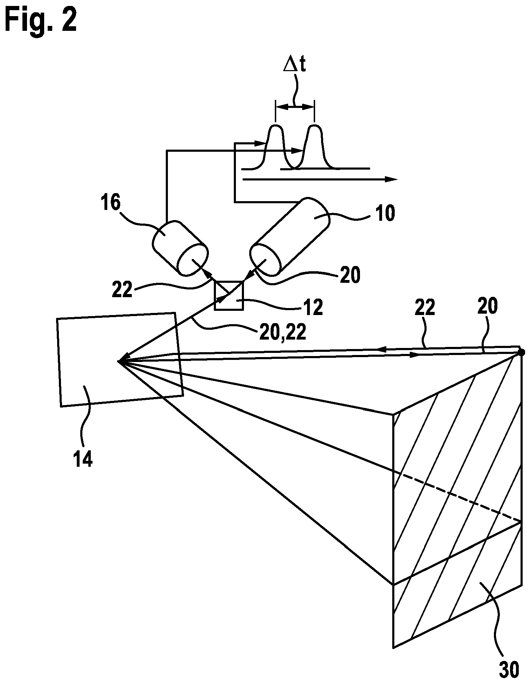

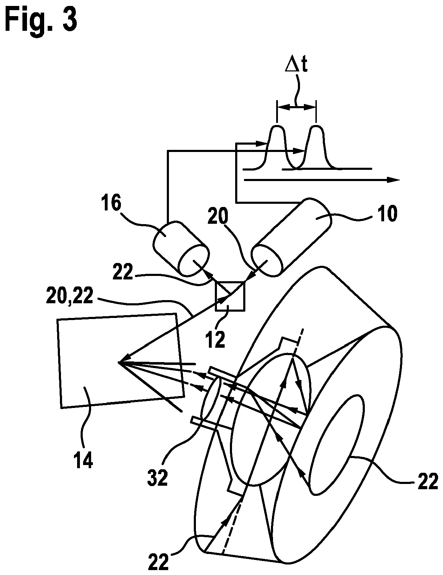

In einem Verfahrensschritt S03 wird ein Raumwinkel abgetastet, das heißt Lichtstrahlen 20 werden in den Raumwinkel ausgesendet. Dazu werden mittels der Lichtquelle 10 (siehe auch Figuren 2 und 3) die Lichtstrahlen 20 in Abhängigkeit von der bestimmten aktuellen Spiegelstellung des mikromechanischen Spiegels 14 gemäß den ersten Ansteuersignalen des Schussmuster 13 erzeugt. Zum Aussenden S03 der Lichtstrahlen 20 in den Raumwinkels werden die Lichtstrahlen 20 mittels des mikromechanischen Spiegels 14, welcher sich in der bestimmten aktuellen Spiegelstellung befindet, abgelenkt. Dem Mikrospiegelscanner liegen somit Informationen vor, in welchen Raumwinkel bezüglich des Mikrospiegelscanners zu welchem Zeitpunkt die Lichtstrahlen 20 mit welchen Eigenschaften ausgesendet wurden. Die Eigenschaften der Lichtstrahlen 20 können eine Strahlbreite, eine Strahlungsleistung etc. umfassen.

Es kann eine Transformationsvorschrift vorbestimmt sein, gemäß welcher die Spiegelstellungen des mikromechanischen Spiegels 14 in Raumwinkel bezüglich des Mikrospiegelsscanners umgerechnet werden können. Dies kann etwa dann vorteilhaft sein, wenn im Strahlengang der Lichtstrahlen 20 zwischen dem mikromechanischen Spiegel 14 und dem Raumwinkel weitere optische Einrichtungen 32 ausgebildet sind.

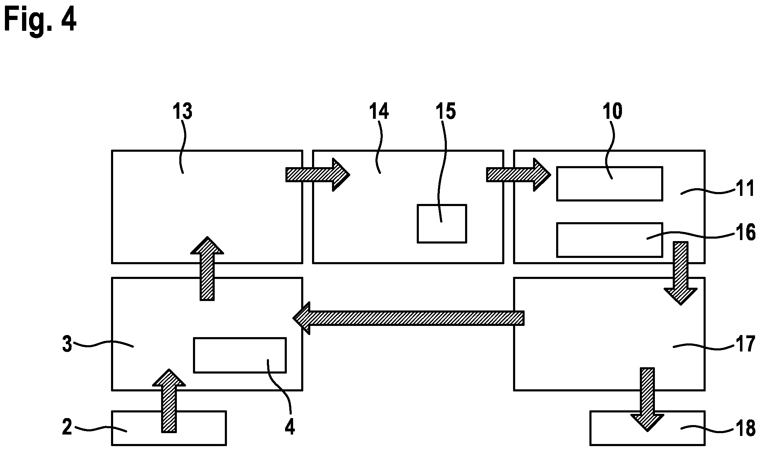

Treffen die Lichtstrahlen 20 in dem Raumwinkel auf ein Objekt 30 (vgl. Figur 2), können die abgelenkten Lichtstrahlen 20 an dem Objekt 30 spekular oder diffus auf den Mikrospiegelscanner zurück reflektiert werden. Auf diese Weise reflektierte Lichtstrahlen 22 werden in einem weiteren Verfahrensschritt S04 mittels eines Lichtsensors 16 des Mikrospiegelsscanners gemessen. Beispielsweise mittels einer Recheneinrichtung 17 (vgl. Figur 4) kann eine Distanz zwischen dem Objekt 30 und dem Mikrospiegelscanner bestimmt werden. Dazu kann insbesondere eine Zeitverschiebung Δt zwischen einem Zeitpunkt des Erzeugens der Lichtstrahlen 20 und einem Zeitpunkt des Messens S04 der an dem Objekt 30 in dem Raumwinkel reflektierten Lichtstrahlen 22 bestimmt werden. Unter Verwendung von Informationen über den Strahlengang der Lichtstrahlen 20, 22 innerhalb des Mikrospiegelscanners und der Lichtgeschwindigkeit kann so die Distanz zwischen dem Objekt 30 und dem Mikrospiegelscanner errechnet werden.

In einem weiteren Verfahrensschritt S05 wird eine Position des Objekts 30 bezüglich des Mikrospiegelscanners und/oder eine Art des Objekts 30 zumindest in Abhängigkeit von der bestimmten Distanz und der bestimmten aktuellen Spiegelstellung des Spiegels 14 bestimmt. Es kann beispielsweise auch eine Strahlungsleistungsdifferenz der gemessenen Lichtstrahlen 22 bezüglich der erzeugten Lichtstrahlen 20 festgestellt werden, aufgrund dessen auf eine Oberflächenbeschaffenheit des Objekts 30 geschlossen werden kann. Ist die Strahlungsleistungsdifferenz beispielsweise sehr gering, kann auf eine spiegelnde, beispielsweise eine metallische Oberfläche geschlossen werden. Wird etwa ein Fahrzeug mit dem Mikrospiegelscanner ausgestattet, kann darauf geschlossen werden, dass es sich bei dem Objekt 30 mit der metallischen Oberfläche um ein weiteres Fahrzeug handeln könnte. Zum Zweck der Bestimmung S05 der Art des Objekts 30 kann eine Datenbank 18 mit vorbestimmten Identifikationscharakteristiken vorgesehen sein. In der Datenbank 18 können die oben beschriebenen Indizien zum Identifizieren eines Fahrzeugs enthalten sein.

In einem Verfahrensschritt S06 wird das Schussmuster 13 in Abhängigkeit zumindest von der bestimmten Position und/oder der bestimmten Art des Objekt 30 angepasst. Dies kann beispielsweise durch eine Schussmuster-Anpassungseinrichtung 3 (vgl. Figur 4) erfolgen. Zur Steuerung der Schussmuster-Anpassungseinrichtung 3 kann die Recheneinrichtung 17, welche in Form einer Auswerte-Elektronik, aber auch in Form einer Software vorliegen kann, eine Auswertung der bestimmten S05 Position und/oder Art des Objekt 30 vornehmen. Die kann unterschiedliche Verarbeitungsebenen zur Objektdetektion, zum Objekttracking, zur Objektidentifikation und/oder zu einer Situationsanalyse enthalten. Die Ergebnisse der Auswertung können an nachgeschaltete Funktionen 19 (vgl. Figur 4) weitergeleitet werden. Die Schussmuster-Anpassungseinrichtung 3 kann das Schussmuster 13 nicht nur in Abhängigkeit von der bestimmten Position und/oder Art des Objekts 30 anpassen, sondern kann dabei auch die eben beschriebenen weiteren Ergebnisse der Recheneinrichtung 16 berücksichtigen. Zudem können Daten, welche von äußeren Sensoren 2 (vgl. Figur 4) ermittelt werden, oder sonstige bereitgestellte Informationen das Anpassen S06 des Schussmusters 13 beeinflussen.

Zum Beispiel könnten Informationen über eine Geschwindigkeit des mit dem Mikrospiegelsensors ausgestatteten Fahrzeugs dazu genutzt werden, bei höheren Geschwindigkeiten einen Raumwinkelbereich in Fahrtrichtung vor dem Fahrzeug mit einer höheren Bildauflösung zu scannen als Raumwinkelbereiche seitlich des Fahrzeugs. Mit einer höheren Bildauflösung ist beispielsweise gemeint, dass in dem Raumwinkelbereich vor dem Fahrzeug pro Steradiant mehr Raumwinkel abgetastet bzw. gescannt werden als in den Raumwinkelbereichen seitlich des Fahrzeugs.

Mittels der äußeren Sensoren 2 kann auch beispielsweise eine Bewegung des Mikrospiegelscanners, etwa ein Nicken, Wanken und/oder Rollen, aber auch ein Pendeln, eine Präzession oder eine Verbiegung, erfasst werden. Unerwünschte Bewegungen können bei dem Anpassen S06 des Schussmusters 13 korrigiert werden.

Es ist auch denkbar, Objekte 30, deren Position und/oder Art bestimmt S05 wurde, detailliert zu vermessen, etwa indem in der Nähe einer erwarteten Objektkante des Objekts 30 mittels eines angepassten Schussmusters 13 eine höhere Scanrate, d.h. Bildauflösung, bewirkt wird. Es kann auch etwa in Notbremssituationen des Fahrzeugs mit dem Mikrospiegelscanner die Scanrate erhöht werden und das detaillierte Vermessen eines potentiell kollidierenden Objekts 30 mit höchster Priorität erfolgen. Dabei können Maßnahmen zur Verringerung der thermischen Belastung der Lichtquelle 10 und/oder des Spiegels 14 auch außer Kraft gesetzt werden.

Figur 2 zeigt eine schematische Ansicht eines Mikrospiegelscanners gemäß einer ersten Ausführungsform der vorliegenden Erfindung.

Gemäß Figur 2 werden sowohl die von der Lichtquelle 10 erzeugten Lichtstrahlen 20 als auch die zu messenden Lichtstrahlen 22 über einen optionalen Strahlteiler 12 geleitet. Der mikromechanische Spiegel 14 ist kardanisch an zwei Achsen aufgehängt. Alternativ sind aber auch zahlreiche weitere Ansteuer- und Aktuierungsmaßnahmen und entsprechende Ausbildungen von mikromechanischen Spiegeln 14 verwendbar.

Figur 3 zeigt eine schematische Ansicht eines Mikrospiegelscanners gemäß einer zweiten Ausführungsform der vorliegenden Erfindung.

Gemäß Figur 3 weist der Mikrospiegelscanner eine optische Einrichtung 32 auf, welche die Lichtstrahlen 20, 22 durchqueren. Die optische Einrichtung 32 weist eine omnidirektionale Linse 32 auf. Die optische Achse ist der omnidirektionalen Linse 32 ist orthogonal zu den Achsen des Spiegels angeordnet. Mittels der omnidirektionalen Linse 32 können die Lichtstrahlen 20 die Raumwinkel innerhalb eines großen Raumwinkelbereichs mit einem besonders großen Öffnungswinkel scannen. Eine solche Anordnung ist insbesondere für ein Scannen in einem Nahbereich um den Mikrospiegelscanner vorteilhaft.

Figur 4 zeigt ein schematisches Blockdiagramm, welches ein mögliches Zusammenwirken von Komponenten eines erfindungsgemäßen Mikrospiegelscanners veranschaulicht.

Die Schussmuster-Anpassungseinrichtung 3 weist gemäß Figur 4 eine Datenbank 4 mit vorgespeicherten Schussmusterfolgen von Schussmustern 13 auf. Die Lichtquelle 10 ist Teil des Messeinrichtung 11, welche neben der Lichtquelle 10 auch noch den Lichtsensor 16 aufweist. Der Lichtsensor kann beispielsweise eine Avalanche Photodiode, APD, oder ein sonstiger Empfänger sein. Die Messeinrichtung 11 kann zudem die optische Einrichtung 32 umfassen, beispielsweise eine Linsenanordnung.

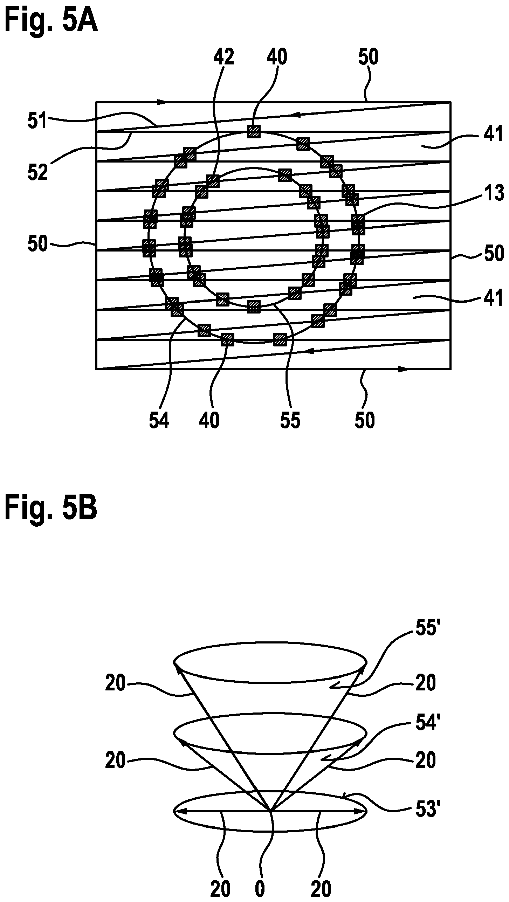

Figur 5A zeigt schematisch ein beispielhaftes Schussmuster, wie es in dem erfindungsgemäßen Verfahren zur Steuerung eines Mikrospiegelscanners verwendbar ist.

Gemäß Figur 5A ist ein Raumwinkelbereich 50, in welchen der mikromechanische Spiegel 14 Lichtstrahlen 20 hinein ablenken kann, beispielhaft auf eine rechteckige Form geometrisch projiziert. Das Schussmuster 13 ist entsprechend ebenfalls rechteckige ausgebildet. Jeder möglichen Spiegelstellung des mikromechanischen Spiegels 14 ist also ein Punkt, oder ein Bereich, beispielsweise ein Pixel, des Schussmusters 13 zugeordnet. Gemäß Figur 5A ist beispielhaft angenommen, dass der Mikrospiegel 14 zyklisch die Spiegelstellungen gemäß jeweils zueinander parallelen Linien 51 und jeweils zueinander parallel Linien 52 in dem Schussmuster zickzackförmig durchfährt. Im Sinne der Klarheit sind die Linien 51, 52 in Figur 5A schematisch mit vergrößerten Abständen dargestellt.

Das in Figur 5A dargestellte Schussmuster 13 ist - als besonders einfaches Beispiel - als Schwarz-Weiß-Bild realisiert. Bei einer Spiegelstellung des mikromechanischen Spiegels 14, deren zugeordneter Bereich des Schussmusters 13 eine weiße Fläche 41 zeigt, werden keine Lichtstrahlen 20 durch die Lichtquelle 10 erzeugt. Für die Lichtquelle ergibt sich also eine Ruhezeit. Die Lichtstrahlen 20 werden lediglich bei solchen Spiegelstellungen erzeugt, deren zugeordnete Bereiche, beispielsweise Pixel, des Schussmusters 13 in dem Bild schwarze Bereiche 40, 42 sind. Gemäß Figur 5A sind die schwarzen Bereiche 40, 42 entlang zwei denkbaren konzentrischen Kreisen 54, 55 angeordnet. Je näher die schwarzen Bereiche in dem Schussmuster 13 beieinander liegen, desto höher ist die Scanrate in einem entsprechenden Raumwinkelbereich.

Figur 5B zeigt schematisch Kegelschalen, entlang welchen die Lichtstrahlen 20 gemäß dem Schussmuster 13 zum Scannen des Raumwinkels ausgesandt werden können.

Für den Fall, dass, wie in Figur 3 bezüglich der zweiten Ausführungsform der vorliegenden Erfindung gezeigt, eine omnidirektionale Optik in bzw. an den Mikrospiegelscanner ausgebildet ist, können kreisförmige Strukturen 54, 55 in dem Schussmuster 13 nach dem Durchqueren der omnidirektionalen Optik 32 zu einem erfassenden Scan auf Kegelmantelflächen 53', 54', 55' führen. Unterschiedliche Kreisradien der kreisförmigen Elemente 54, 55 des Schussmusters 13 führen dabei zu Kegelmantelflächen 54', 55' mit unterschiedlicher Steigung an der Kegelspitze O, an welcher der Mikrospiegelscanner liegt. Aus dem Kreis 54 des Schussmuster 13 könnte beispielsweise die Kegelmantelfläche 54' folgen, welche eine geringere Steigung aufweist als die Kegelmantelfläche 55', welche aus dem Kreis 55 des Schussmuster 13 folgt. Zum Scannen der flachen Kegelmantelfläche 53' könnten etwa schwarze Bereiche bzw. Pixel entlang von Kanten des Schussmusters 13 gemäß Figur 5A vorgesehen sein. Auf diese Weise lassen sich etwa Funktionen von heute üblichen Mehrebenen-Laserscannern durch geeignetes Anpassen S06 des Schussmusters 13 realisieren. Es können auch gespeicherte Schussmusterfolgen nacheinander vorgegeben werden, etwa in Form einer Sequenz von Bildern, ähnlich eines sich wiederholenden Films.

Die als Bilder realisierten Schussmuster 13 können auch weitere Informationen aufweisen. Beispielsweise kann eine gewünschte Intensität der von der Lichtquelle 10 erzeugten Lichtstrahlen 20 über Graustufen in dem als Bild realisierten Schussmuster 13 kodiert werden. Beispielsweise kann ein schwarzer Bereich 40, 42 in dem Schussmuster 13 für die maximal von der Lichtquelle 10 erzeugbare Strahlungsleistung stehen, während in Graustufen eingefärbte Bereiche des Schussmusters 13 für eine proportional zu dem Schwarz-Anteil der entsprechenden Graustufen verringerte Strahlungsleistung der erzeugten Lichtstrahlen 20 stehen können. Denkbar ist auch, farbige Bilder als Schussmuster 13 zu verwenden, d.h. Bilder mit separaten RGB-Kanälen. Über den benutzten RGB-Kanal kann beispielsweise eine gewünschte Strahlbündelung, d.h. eine auf gewünschte Weise breite oder schmale Strahlform der Lichtstrahlen 20 erzeugt werden. Jeder RGB-Kanal kann zum Beispiel Ansteuersignale für je eine separate Laserdiode der Lichtquelle 10 codieren.

Die Verwendung von Bildern als Schussmuster ermöglicht es, spezielle elektronische Elemente (beispielsweise ASICs), welche zur Bildverarbeitung, beispielsweise zum Zwecke einer Projektion, ausgebildet sind, in oder an dem Mikrospiegelscanner zu verbauen. Dadurch verringert sich die Anzahl der speziell herzustellenden elektronischen Bauteile.

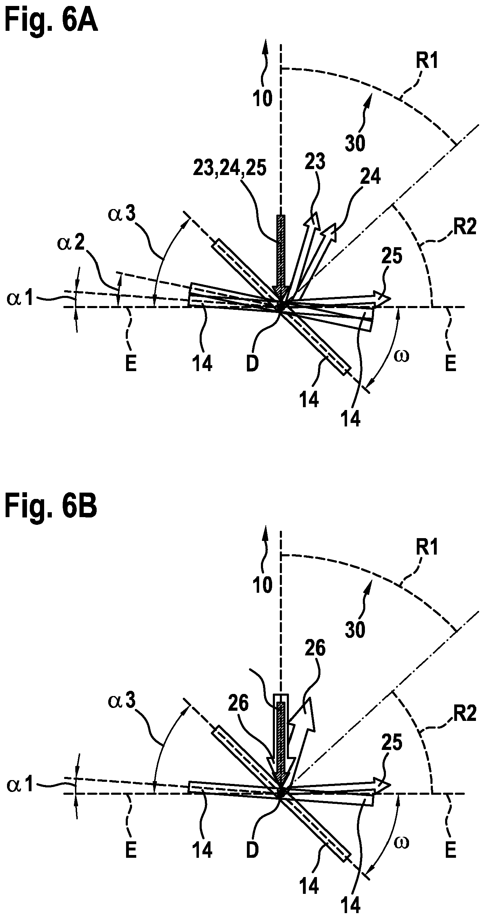

Figuren 6A bis 6C zeigen schematische Diagramme zur Erläuterung möglicher Eigenschaften der gemäß dem Schussmuster 13 erzeugten Lichtstrahlen 20. Die erzeugten Lichtstrahlen 20 fallen in den Figuren 6A bis 6C stets senkrecht von oben, von der Lichtquelle 10 kommend, ein.

In Figur 6A ist schematisch eine spiegelnde Oberfläche des mikromechanischen Spiegels 14 in drei verschiedenen Spiegelstellungen dargestellt, welche jeweils durch einen Auslenkungswinkel α1, α2, α3 um eine Drehachse D aus einer Bezugsebene E charakterisiert sind. Die Differenzen zwischen α2 und α1 ist dabei weniger als halb so groß wie die Differenz zwischen α3 und α2 und zwischen α3 und α1. Bei jeder der dargestellten Spiegelstellungen α1, α2, α3 wird gemäß dem für die Figur 6A angenommenen Schussmuster 13 ein Lichtstrahl 23, 24, 25 durch die Lichtquelle 10 erzeugt und gemäß der Spiegelstellung α1, α2, α3 des Spiegels 14 abgelenkt. In diesem Beispiel soll sich der Spiegel 14 mit einer konstanten Drehgeschwindigkeit ω um die Drehachse D bewegen. Die gezeigte Spiegelstellungen α1, α2, α3 werden also zusammenhängend nacheinander durchfahren. Ein erster Lichtstrahl 23, welcher bei der Spiegelstellung α1 abgelenkt wird und ein zweiter Lichtstrahl 24, welcher bei der Spiegelstellung α2 abgelenkt wird, scannen jeweils einen Raumwinkel in einem ersten Raumwinkelbereich R1. Ein dritter Lichtstrahl 25, welcher von dem Spiegel 14 in der Spiegelstellung α3 abgelenkt wird, scannt einen Raumwinkel in einem zweiten Raumwinkelbereich R2, welcher genauso groß ist wie der erste Raumwinkelbereich R1.

Ein erster Zeitabstand zwischen dem Erzeugen des ersten Lichtstrahls 23 und dem Erzeugen des zweiten Lichtstrahls 24 ist kürzer als ein zweiter Zeitabstand zwischen dem Erzeugen des zweiten Lichtstrahls 24 und dem Erzeugen des dritten Lichtstrahls 25. Durch das Schussmuster, dass so angepasst ist, dass ein Scannen gemäß Figur 6A durchgeführt wird, wird also der erste Raumwinkelbereich R1 mit einer dichteren Scanrate, d.h. mit höherer Auflösung aufgrund der schnelleren Folge der Lichtstrahlen 23, 24 bei konstanter Drehgeschwindigkeit ω gescannt. Der zweite Raumwinkelbereich R2 wird entsprechend weniger dicht, also mit regional niedrigerer Auflösung gescannt. Dies kann z.B. von Vorteil sein, wenn in dem ersten Raumwinkelbereich R1 ein Objekt 30 bestimmt S05 wurde, welches feiner abgetastet werden soll, während sich im zweiten Raumwinkelbereich R2 gleichzeitig kein solches Objekt befindet, und die thermische Belastung im Durchschnitt etwa gleich bleiben soll.

In Figur 6B ist außer dem Spiegel 14 in der Spiegelstellung α3, bei welcher der dritte Lichtstrahl 25 abgelenkt wird, der Spiegel 14 in der Spiegelstellung α1 gezeigt, bei welcher ein vierter Lichtstrahl 26 zum Abtasten bzw. Scannen eines Raumwinkels innerhalb des ersten Raumwinkelbereichs R1 abgelenkt wird. Für das in Figur 6B gezeigte Beispiel ist das Schussmuster 13 derart ausgebildet, dass bei der Spiegelstellung α1 der vierte Lichtstrahl 26 mit einer höheren Strahlungsleistung als der dritte Lichtstrahl 25 von der Lichtquelle 10 erzeugt wird. Der vierte Lichtstrahl 26 mit der höheren Strahlungsleistung kann es ermöglichen, Objekte 30 innerhalb des Raumwinkelbereichs R1 in größerer Entfernung von dem Mikrospiegelscanner zu bestimmen S05.

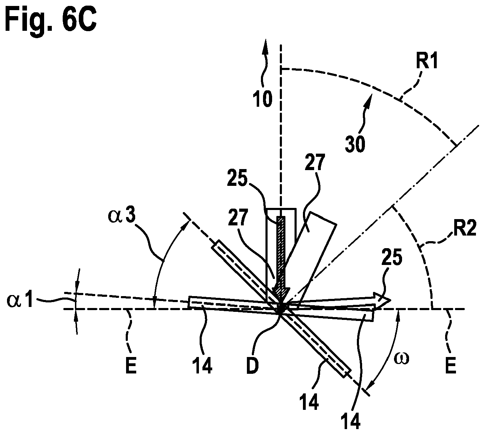

Figur 6C zeigt den mikromechanischen Spiegel 14 in den gleichen beiden Spiegelstellungen α1, α3 wie in Figur 6B. Im Unterschied zu Figur 6B wird gemäß Figur 6C, wenn der Spiegel 14 in der Spiegelstellung α1 ist, ein fünfter Lichtstrahl 27 von der Lichtquelle 10 erzeugt und von dem mikromechanischen Spiegel 14 zum Abtasten bzw. Scannen eines Raumwinkels in den ersten Raumwinkelbereich R1 abgelenkt. Gemäß dem für Figur 6C beispielhaft angenommenen Schussmuster 13 wird der fünfte Lichtstrahl 27 im Vergleich zu dem dritten Lichtstrahl 25 mit der gleichen Strahlungsleistung, aber mit einer breiteren Strahlform, also geringerer Lichtintensität erzeugt. Die breitere Strahlform des fünften Lichtstrahls 27 kann beispielsweise dadurch realisiert werden, dass der fünfte Lichtstrahl 27 von der Lichtquelle 10 geringer fokussiert erzeugt wird.

Alternativ kann auch vorgesehen sein, dass mehrere lichterzeugende Dioden innerhalb der Lichtquelle 10, welche versetzt angeordnet sind, gemeinsam den fünften Lichtstrahl 27 erzeugen. Durch das Scannen von Raumwinkeln mit Lichtstrahlen wie dem fünften Lichtstrahl 27 mit breiterer Strahlform können bei gleicher verwendeter Gesamtstrahlungsleistung größere Anteile der Raumwinkelbereiche R1, R2 gescannt werden als wenn Lichtstrahlen wie der dritte Lichtstrahl 25 mit schmälerer Strahlform verwendet werden. Gleichzeitig kann die thermische Belastung der Lichtquelle 10 und des Spiegels 14 dadurch klein gehalten werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der von in den Mikrospiegelscanner einlaufende Lichtstrahl 22 auch über einen separaten Eingang eingekoppelt werden und/oder nicht über den mikromechanischen Spiegel 14 und/oder über den Strahlteiler 12, sofern dieser vorhanden ist, geleitet werden.

## Patentansprüche

1. Verfahren zur Steuerung eines Mikrospiegelscanners mit folgenden Verfahrensschritten:
Bereitstellen (S01) eines Schussmusters (13), welches zumindest Informationen über erste Ansteuersignale in Abhängigkeit von Spiegelstellungen (α1, α2, α3) eines verstellbaren mikromechanischen Spiegels (14) des Mikrospiegelscanners umfasst, welche zum Ansteuern einer Lichtquelle (10) des Mikrospiegelscanners bestimmt sind;
Bestimmen (S02) einer aktuellen Spiegelstellung (α1, α2, α3) des mikromechanischen Spiegels (14);
Aussenden (S03) von Lichtstrahlen (20) in einen Raumwinkel durch Ablenken der Lichtstrahlen (20), welche in Abhängigkeit von der bestimmten (S02) aktuellen Spiegelstellung (α1, α2, α3) des mikromechanischen Spiegels (14) gemäß den ersten Ansteuersignalen des Schussmusters (13) erzeugt werden, mittels des mikromechanischen Spiegels (14) in der bestimmten aktuellen Spiegelstellung (α1, α2, α3);
Messen (S04) von an einem Objekt (30) in dem Raumwinkel reflektierten Lichtstrahlen (22) mittels eines Lichtsensors (16) des Mikrospiegelscanners zum Bestimmen einer Distanz zwischen dem Objekt (30) und dem Mikrospiegelscanner;
Bestimmen (S05) einer Position des Objekts (30) bezüglich des Mikrospiegelscanners und/oder einer Art des Objekts (30) zumindest in Abhängigkeit von der bestimmten Distanz und der bestimmten aktuellen Spiegelstellung (α1, α2, α3) des mikromechanischen Spiegels (14); **gekennzeichnet durch**
Anpassen (S06) des Schussmusters (13) in Abhängigkeit von der bestimmten Position und/oder Art des Objekts (30).

2. Verfahren nach Anspruch 1 mit dem Verfahrensschritt:
Ansteuern des verstellbaren mikromechanischen Spiegels (14) mit zweiten Ansteuersignalen derart, dass der verstellbare mikromechanische Spiegel (14) zyklisch eine bestimmte Abfolge der Spiegelstellungen (α1, α2, α3) durchfährt,
wobei das Bestimmen (S02) der aktuellen Spiegelstellung (α1, α2, α3) des verstellbaren mikromechanischen Spiegels (14) basierend auf den zweiten Ansteuersignalen erfolgt.

3. Verfahren nach Anspruch 2, wobei die bestimmte Abfolge von Spiegelstellungen, welche der verstellbare mikromechanische Spiegel (14) zyklisch durchfährt, in Abhängigkeit von ersten Signalen von äußeren Sensoren (2) und/oder in Abhängigkeit von einer ersten Eingabe eines Benutzers im laufenden Betrieb anpassbar ist.

4. Verfahren nach einem der vorhergehenden Ansprüche 1 bis 3, wobei das Schussmuster (13) in Abhängigkeit von zweiten Signalen von äußeren Sensoren (2) und/oder in Abhängigkeit von einer zweiten Eingabe eines Benutzers im laufenden Betrieb des Mikrospiegelscanners anpassbar ist.

5. Verfahren nach einem der vorhergehenden Ansprüche 1 bis 4, wobei das Schussmuster (13) derart angepasst (S06) wird, dass in Abhängigkeit von ersten Spiegelstellungen, welche zusammenhängend nacheinander durchfahren werden, eine erste Mehrzahl der Lichtstrahlen (20) erzeugt wird, wobei die Lichtstrahlen (20) der ersten Mehrzahl durch erste, jeweils gleiche, Zeitabstände voneinander zeitlich beabstandet sind.

6. Verfahren nach Anspruch 5, wobei das Schussmuster (13) derart angepasst (S06) wird, dass in Abhängigkeit von zweiten Spiegelstellungen, welche zusammenhängend nacheinander durchfahren werden, eine zweite Mehrzahl der Lichtstrahlen (20) erzeugt wird, wobei die Lichtstrahlen (20) der zweiten Mehrzahl durch zweite, jeweils gleiche, Zeitabstände voneinander zeitlich beabstandet sind, und
wobei die zweiten Zeitabstände kürzer oder länger sind als die ersten Zeitabstände.

7. Verfahren nach Anspruch 5, wobei das Schussmuster (13) derart angepasst (S06) wird, dass in Abhängigkeit von dritten Spiegelstellungen, welche zusammenhängend nacheinander durchfahren werden, eine dritte Mehrzahl der Lichtstrahlen (20) erzeugt wird, wobei die Lichtstrahlen (20) der dritten Mehrzahl der Lichtstrahlen (20) mit einer breiteren oder schmäleren Strahlform als die Lichtstrahlen (20) der ersten Mehrzahl der Lichtstrahlen (20) erzeugt werden.

8. Verfahren nach Anspruch 5, wobei das Schussmuster (13) derart angepasst (S06) wird, dass in Abhängigkeit von vierten Spiegelstellungen, welche zusammenhängend nacheinander durchfahren werden, eine vierte Mehrzahl der Lichtstrahlen (20) erzeugt wird, wobei die Lichtstrahlen (20) der vierte Mehrzahl der Lichtstrahlen (20) mit einer höheren oder einer geringeren Strahlungsleistung als die Lichtstrahlen (20) der ersten Mehrzahl der Lichtstrahlen (20) erzeugt werden.

9. Mikrospiegelscanner mit:
einem verstellbaren mikromechanischen Spiegel (14);
einer ansteuerbaren Lichtquelle (10), welche dazu
ausgebildet ist, in Abhängigkeit von ersten Ansteuersignalen eines Schussmusters (13) und in Abhängigkeit von einer bestimmten aktuellen Spiegelstellung des verstellbaren mikromechanischen Spiegels (14) Lichtstrahlen (20) zu erzeugen, wobei das Schussmuster (13) zumindest Informationen über die ersten Ansteuersignale in Abhängigkeit von Spiegelstellungen (α1, α2, α3) des verstellbaren mikromechanischen Spiegels (14) umfasst, welche zum Ansteuern der Lichtquelle (10) bestimmt sind,
wobei die Lichtquelle (10) und der verstellbare mikromechanische Spiegel (14) bezüglich einander derart angeordnet sind, dass die erzeugten Lichtstrahlen (20) mittels des mikromechanischen Spiegels (14) zum Aussenden (S03) der Lichtstrahlen (20) in einen Raumwinkels ablenkbar sind;
einer Spiegelstellungs-Bestimmungseinrichtung (15), welche dazu ausgebildet ist, die aktuelle Spiegelstellung (α1, α2, α3) des verstellbaren mikromechanischen Spiegels (14) zu bestimmen (S02);
einem Lichtsensor (16), welcher dazu ausgebildet ist, an einem Objekt (30) in dem Raumwinkel zu dem Mikrospiegelscanner reflektierte Lichtstrahlen (22) zu messen (S04);
einer Recheneinrichtung (17), welche dazu ausgebildet ist, von den gemessenen reflektierten Lichtstrahlen (22) zurückgelegte Distanzen zu bestimmen und in Abhängigkeit von der bestimmten Distanz und der bestimmten aktuellen Spiegelstellung (α1, α2, α3) eine Position und/oder eine Art des Objekts (30) zu bestimmen; **gekennzeichnet durch**
eine Schussmuster-Anpassungseinrichtung (3), welche dazu ausgebildet ist, das bereitgestellte Schussmuster (13) in Abhängigkeit von der bestimmten Position und/oder Art des Objekts (30) anzupassen (S06).

## Claims

1. Method for controlling a micromirror scanner, including the following method steps:
providing (S01) a shot pattern (13), which at least comprises information items about first actuation signals depending on mirror positions (α1, α2, α3) of an adjustable micromechanical mirror (14) of the micromirror scanner, said actuation signals being destined to actuate a light source (10) of the micromirror scanner;
determining (S02) a current mirror position (α1, α2, α3) of the micromechanical mirror (14);
emitting (S03) light rays (20) into a solid angle by deflecting the light rays (20), which are produced depending on the determined (S02) current mirror position (α1, α2, α3) of the micromechanical mirror (14) according to the first actuation signals of the shot pattern (13), by means of the micromechanical mirror (14) in the determined current mirror position (α1, α2, α3);
measuring (S04) light rays (22) reflected at an object (30) in the solid angle by means of a light sensor (16) of the micromirror scanner for the purposes of determining a distance between the object (30) and the micromirror scanner;
determining (S05) a position of the object (30) in relation to the micromirror scanner and/or a type of the object (30), at least depending on the determined distance and the determined current mirror position (α1, α2, α3) of the micromechanical mirror (14); **characterized by**
adapting (S06) the shot pattern (13) depending on the determined position and/or type of the object (30).

2. Method according to Claim 1, including the method step of:
actuating the adjustable micromechanical mirror (14) with second actuation signals in such a way that the adjustable micromechanical mirror (14) cyclically passes through a determined sequence of the mirror positions (α1, α2, α3),
wherein determining (S02) the current mirror position (α1, α2, α3) of the adjustable micromechanical mirror (14) is implemented on the basis of the second actuation signals.

3. Method according to Claim 2, wherein the determined sequence of the mirror positions, through which the adjustable micromechanical mirror (14) passes in cyclical fashion, is adaptable depending on first signals of external sensors (2) and/or depending on a first input of a user during running operation.

4. Method according to any one of the preceding Claims 1 to 3, wherein the shot pattern (13) is adaptable depending on second signals of external sensors (2) and/or depending on a second input of a user during running operation of the micromirror scanner.

5. Method according to any one of the preceding Claims 1 to 4, wherein the shot pattern (13) is adapted (S06) in such a way that a first plurality of the light rays (20) is produced depending on first mirror positions, which are passed through successively in continuous fashion, wherein the light rays (20) of the first plurality are separated from one another in time by first, in each case equal, time intervals.

6. Method according to Claim 5, wherein the shot pattern (13) is adapted (S06) in such a way that a second
plurality of the light rays (20) is produced depending on second mirror positions, which are passed through successively in continuous fashion, wherein the light rays (20) of the second plurality are separated from one another in time by second, in each case equal, time intervals, and
wherein the second time intervals are shorter or longer than the first time intervals.

7. Method according to Claim 5, wherein the shot pattern (13) is adapted (S06) in such a way that a third plurality of the light rays (20) is produced depending on third mirror positions, which are passed through successively in continuous fashion, wherein the light rays (20) of the third plurality of the light rays (20) are produced with a wider or narrower beam shape than the light rays (20) of the first plurality of the light rays (20) .

8. Method according to Claim 5, wherein the shot pattern (13) is adapted (S06) in such a way that a fourth plurality of the light rays (20) is produced depending on fourth mirror positions, which are passed through successively in continuous fashion, wherein the light rays (20) of the fourth plurality of the light rays (20) are produced with a higher or lower radiant flux than the light rays (20) of the first plurality of the light rays (20) .

9. Micromirror scanner, comprising:
an adjustable micromechanical mirror (14);
an actuatable light source (10), which is embodied to produce light rays (20) depending on first actuation signals of a shot pattern (13) and depending on a determined current mirror position of the adjustable micromechanical mirror (14), wherein the shot pattern (13) comprises information items about first actuation signals depending on mirror positions (α1, α2, α3) of the adjustable micromechanical mirror (14), said actuation signals being destined to actuate the light source (10), wherein the light source (10) and the adjustable micromechanical mirror (14) are arranged in such a way in relation to one another that the produced light rays (20) are deflectable by means of the micromechanical mirror (14) for the purposes of emitting (S03) the light rays (20) into a solid angle;
a mirror position determining device (15), which is embodied to determine (S02) the current mirror position (α1, α2, α3) of the adjustable micromechanical mirror (14);
a light sensor (16), which is embodied to measure (S04) light rays (22) reflected to the micromirror scanner at an object (30) in the solid angle;
a computing device (17), which is embodied to determine distances travelled by the measured reflected light rays (22) and determine a position and/or a type of the object (30) depending on the determined distance and the determined current mirror position (α1, α2, α3); **characterized by**
a shot pattern adapting device (3), which is embodied to adapt (S06) the provided shot pattern (13) depending on the determined position and/or type of the object (30).

## Revendications

1. Système de balayage à micro-miroirs, le procédé présentant les étapes suivantes :
préparer (S01) un motif de tir (13) qui comporte au moins des informations sur des premiers signaux de commande en fonction de positions (α1, α2, α3) d'un miroir micromécanique ajustable (14) du système de balayage à micro-miroirs, ces informations étant destinées à commander une source de lumière (10) du système de balayage à micro-miroirs,
déterminer (S02) une position actuelle (α1, α2, α3) du miroir micromécanique ajustable (14),
émettre (S03) des faisceaux de lumière (20) dans un angle solide par déviation des faisceaux de lumière (20) en fonction de la position actuelle (α1, α2, α3) du miroir micromécanique (14) définie en (S02), selon les premiers signaux de commande du motif de tir (13), au moyen du miroir micromécanique (14) dans la position actuelle (α1, α2, α3) du miroir qui a été définie,
mesurer (S04) les faisceaux de lumière (22) réfléchis sur un objet (30) dans l'angle solide au moyen d'un capteur de lumière (16) du système de balayage à micro-miroirs, en vue de déterminer la distance entre l'objet (30) et le système de balayage à micro-miroirs,
déterminer (S05) une position de l'objet (30) par rapport au système de balayage à micro-miroirs et/ou un type d'objet (30) au moins en fonction de la distance qui a été définie et de la position actuelle (α1, a2, α3) du miroir micromécanique (14) qui a été définie, **caractérisé par**
l'adaptation (S06) du motif de tir (13) en fonction de la position et/ou du type de l'objet (30) qui ont été définis.

2. Procédé selon la revendication 1, présentant l'étape suivante :
commande du miroir micromécanique ajustable (14) par des deuxièmes signaux de commande de telle sorte que le miroir micromécanique ajustable (14) ajustable traverse cycliquement une succession définie de positions (α1, α2, α3) du miroir,
la détermination (S02) de la position actuelle (α1, α2, α3) du miroir micromécanique ajustable (14) s'effectuant sur la base des deuxièmes signaux de commande.

3. Procédé selon la revendication 2, dans lequel la succession définie de positions du miroir que traverse cycliquement le miroir micromécanique ajustable (14) peut être adaptée en continu en fonction de premiers signaux de capteurs extérieurs (2) et/ou en fonction d'une première introduction par un utilisateur.

4. Procédé selon l'une des revendications 1 à 3 qui précèdent, dans lequel le motif de tir (13) peut être adapté en fonctionnement continu du système de balayage à micro-miroirs en fonction de deuxièmes signaux de capteurs extérieurs (2) d'une deuxième introduction par un utilisateur.

5. Procédé selon l'une des revendications 1 à 4 qui précèdent, dans lequel le motif de tir (13) est adapté (S06) de telle sorte qu'un premier nombre de faisceaux lumineux (20) soit formé en fonction de premières positions de miroir qui sont traversées successivement de manière continue, les faisceaux de lumière (20) du premier nombre étant séparés les uns des autres par des premiers intervalles de temps tous identiques.

6. Procédé selon la revendication 5, dans lequel le motif de tir (13) est adapté (S06) de telle sorte qu'un deuxième nombre de faisceaux lumineux (20) soit formé en fonction de deuxièmes positions de miroir qui sont traversées successivement de manière continue, les faisceaux de lumière (20) du deuxième nombre étant séparés les uns des autres par des deuxièmes intervalles de temps tous identiques, les deuxièmes intervalles de temps étant plus courts ou plus longs que les premiers intervalles de temps.

7. Procédé selon la revendication 5, dans lequel le motif de tir (13) est adapté (S06) de telle sorte qu'un troisième nombre de faisceaux lumineux (20) soit formé en fonction de troisièmes positions de miroir qui sont traversées successivement de manière continue, les faisceaux de lumière (20) du troisième nombre de faisceaux de lumière (20) étant formés à une forme de faisceau plus large ou plus étroite que les faisceaux de lumière (20) du premier nombre de faisceaux de lumière (20).

8. Procédé selon la revendication 5, dans lequel le motif de tir (13) est adapté (S06) de telle sorte qu'un quatrième nombre de faisceaux lumineux (20) soit formé en fonction de quatrièmes positions de miroir qui sont traversées successivement de manière continue, les faisceaux de lumière (20) du quatrième nombre de faisceaux de lumière (20) étant formés à une puissance de rayonnement plus élevée ou plus basse que les faisceaux de lumière (20) du premier nombre de faisceaux de lumière (20).

9. Système de balayage à micro-miroirs présentant :
un miroir micromécanique ajustable (14),
une source de lumière (10) asservie configurée pour former des faisceaux de lumière (20) en fonction de premiers signaux de commande d'un motif de tir (13) et en fonction d'une position actuelle définie du miroir micromécanique ajustable (14), le motif de tir (13) comprenant au moins des informations sur les premiers signaux de commande en fonction de la position actuelle (α1, α2, α3) du miroir micromécanique ajustable (14), les informations étant destinées à la commande de la source de lumière (10),
la source de lumière (10) et le miroir micromécanique ajustable (14) étant disposés l'un par rapport à l'autre de telle sorte que les faisceaux de lumière (20) formés puissent être déviés dans un angle solide au moyen du miroir micromécanique ajustable (14) en vue de l'émission (S03) des faisceaux de lumière (20),
un dispositif (15) de détermination de la position de miroir configuré pour déterminer (S02) la position actuelle (α1, α2, α3) du miroir micromécanique ajustable (14),
un capteur de lumière (16) configuré pour mesurer (S04) des faisceaux lumineux (22) réfléchis sur un objet (30) dans l'angle solide qui conduit au système de balayage à micro-miroirs,
un dispositif de calcul (17) configuré pour mesurer les distances parcourues par les faisceaux lumineux (22) réfléchis et pour déterminer la position et/ou le type de l'objet (30) en fonction de la distance et de la position actuelle (α1, α2, α3) qui ont été définies,
**caractérisé par**
un dispositif (3) d'adaptation du motif de tir configuré pour adapter (S06) le motif de tir (13) préparé en fonction de la position et/ou du type de l'objet (30) qui ont été définis.
